# NEUE EUROPÄISCHE PATENTSCHRIFT

(11) **EP 0 212 625 B2**
(45) Veröffentlichungstag und Bekanntmachung des Hinweises auf die Entscheidung über den Einspruch: **09.10.1996**
(45) Hinweis auf die Patenterteilung: 17.05.1989
(21) Anmeldenummer: 86111481.7
(22) Anmeldetag: 19.08.1986
(51) Int. Cl.: C08B 11/20

(54) **Verfahren zur Herstellung von niedrigviskosen Celluloseethern**
Process for preparing low-viscosity cellulose ethers
Procédé de préparation d'éthers de cellulose de faible viscosité

(30) Priorität: 29.08.1985 DE 3530857
(43) Veröffentlichungstag der Anmeldung: 04.03.1987
(73) Patentinhaber: HOECHST AKTIENGESELLSCHAFT, 65926 Frankfurt am Main (DE)
(72) Erfinder: Pelzer, Heinz, Dr. Dipl.-Chem., D-6227 Oestrich-Winkel (DE)

(56) Entgegenhaltungen:
- DE-B- 522 575
- GB-A- 1 131 251
- US-A- 2 749 336
- TEXTILE RESEARCH JOURNAL, Band 40, Februar 1970, Seiten 178-184, Lancaster, US; A. KANTOUCH et al.: "Action of sodium chlorite on cellulose and cellulose derivatives"
- O. Würz: Celluloseether, Herstellung und Anwendung, E. Roether Verlag, Darmstadt, 1961, S. 25-27
- Encyclop. of Polymer Science and Technology, Vol. 3, 1965, p. 492-497

## Beschreibung

Die vorliegende Erfindung betrifft ein Verfahren zur Herstellung von niedrigviskosen Celluloseethern, z. B. von Hydroxyalkylcellulosen, Carboxymethylcellulosen, Mischethem und besonders Methylcellulosen mit Viskositäten unterhalb von 100 mPa·s, gemessen in wäßriger Lösung, unter Verwendung von Chloritlösungen.

Für die verschiedenen Anwendungsgebiete werden Celluloseether mit unterschiedlichen Eigenschaften benötigt. Neben ihrem Löslichkeitsverhalten oder ihrem Substitutionsgrad ist einer der entscheidenden Parameter zur Charakterisierung der Celluloseether ihre Viskosität. Zur Herstellung niedrigviskoser wasserlöslicher Celluloseether werden in der Fachliteratur im wesentlichen drei Verfahrensweisen beschrieben, die aber alle eine Molekülkettenspaltung zum Hauptziel haben, d. h. aus Ausgangsstoffen mit einer relativ höheren Molekularmasse werden Zwischenprodukte oder Endprodukte mit einer niedrigeren Molekularmasse erzeugt. Dieses Ziel wird entweder erreicht durch Abbau des Cellulosemoleküls vor oder während der Veretherung oder durch Abbau des Celluloseethermoleküls. Bei den beiden ersten Verfahrensweisen tritt als wesentlicher Nachteil von nach ihnen erhaltenen Zwischenprodukten auf, daß diese bereits vor den üblicherweise eingesetzten Reinigungsstufen in den Verfahren zur Herstellung dieser Celluloseether als relativ kleinkettige Moleküle anfallen, wodurch sie ent weder in der Reinigungsflüssigkeit (meistens aus Wasser oder wäßrigen organischen Lösemitteln) zu stark anquellen oder sich darin ebenso wie die Verunreinigungen in zu großem Maße lösen.

Zur Durchführung der dritten Verfahrensvariante sind beispielsweise der Abbau mit chemischen Oxidationsmitteln - wie Hypochlorit oder H₂O₂ - oder mit energiereichen Strahlungen bekannt geworden.

In der DE-PS 667 864 wird ein Verfahren zur Viskositätserniedrigung von wäßrigen Lösungen von Celluloseethern beschrieben, bei dem man auf wäßrige Celluloseetherlösungen Mikroorganismen oder Enzyme einwirken läßt. Die Viskosität wird auf bis zu etwa 50 % des Ausgangswertes erniedrigt.

Bei dem Verfahren zur Viskositätserniedrigung von Celluloseethern mit Wasserstoffperoxid gemäß der DE-AS 20 16 203 (= US-PS 3 728 331) wird ein im wesentlichen trockener, frei fließender, kleinteiliger Celluloseether mit 10- bis 50%iger Wasserstoffperoxidlösung vermischt und diese Mischung auf eine Temperatur von 50 bis 150 °C so lange erhitzt, bis der Celluloseether eine niedrigere Viskosität aufweist. Die Viskosität wird - abhängig von der Menge an H₂0₂, der Reaktionstemperatur und - dauer und der Größe der Ausgangsviskosität - auf bis zu etwa 1% des Ausgangswertes erniedrigt.

Aus der CH-PS 461 455 ist ein Verfahren zur Herstellung niedrigviskoser wasserlöslicher Celluloseether durch oxidativen Abbau höherviskoser Ether mit H₂0₂ bekannt, bei dem man den wasserfeuchten Celluloseether mit einer wäßrigen Lösung von H₂0₂ mischt, wobei ein bestimmtes Mischungsverhältnis an Ether, H₂0₂ und Wassergehalt eingestellt wird, und man das Gemisch dann bei 100 bis 250 °C bis zum völligen Verbrauch des H₂0₂ trocknet. Die Viskosität wird auf bis zu etwa 0,5 % des Ausgangswertes erniedrigt.

In der GB-PS 953 944 wird ein Verfahren zur Erniedrigung der Viskosität wasserlöslicher, nichtionischer Celluloseether beschrieben, bei dem in wäßriger Suspension oder durch Besprühen die Ether mit einer wäßrigen Lösung von H₂0₂ bei Temperaturen von etwa 70 bis 100 °C umgesetzt werden. Die Viskosität wird auf bis zu etwa 0,5 % des Ausgangswertes erniedrigt.

Bei dem Verfahren gemäß der US-PS 2 512 338 wird der Reaktionsmischung aus Alkalicellulose und einem Veretherungsmittel zur Viskositätsbeeinflussung ein Gemisch aus H₂0₂ oder einem Metallperoxid und einem Metallsalz mit einem Mn-, Co-, Feoder Pb-lon zugegeben. Die Viskosität wird auf bis zu etwa 0,3 % des Ausgangswertes erniedrigt.

Aus der US-PS 2 895 891 ist die Bestrahlung von Celluloseethern mit ionisierenden Strahlen bekannt, die bei nichtionischen und ionischen Celluloseethern im trockenen Zustand zu einem Viskositätsabbau führt; ein Viskositäts abbau auch in (wasser)feuchtem Zustand wird jedoch nur bei ionischen, nicht aber bei nichtionischen Celluloseethern beobachtet, die letzteren werden unter diesen Bedingungen vemetzt.

In der US-PS 2 912 431 wird zur Bleichung, Viskositätserniedrigung und zur Verdichtung einem Gemisch aus einer fasrigen Carboxyalkylcellulose und einem wäßrigen Alkohol ein Salz mit einem Alkali-, Erdalkali- oder Ammoniumkation und einem Hypohalogenit-, Peroxid- oder Periodatanion zugesetzt. Die Viskosität wird auf bis zu etwa 1 % des Ausgangswertes erniedrigt, die Reaktionstemperatur liegt zwischen 40 und 80 °C.

Bei dem Verfahren gemäß der US-PS 4 061 859 wird ein trockenes Celluloseether-Pulver zur Viskositätserniedrigung unter gleichzeitiger Verringerung der Molekularmasse a) mit gasförmigem Halogenwasserstoff bei bis zu etwa 80 °C und anschließend b) mit gasförmigem Schwefeldioxid bei Raumtemperatur umgesetzt. Durch den zusätzlichen Verfahrensschritt b) wird die Verfärbung (im wesentlichen eine Gelbfärbung) des Celluloseethers, die bei alleiniger Durchführung der Stufe a) eintritt, verhindert. Die Viskosität wird auf bis zu etwa 0,05 % des Ausgangswertes erniedrigt, die Feuchtigkeit im zu behandelnden Celluloseether-Pulver soll einen Maximalwert von etwa 5 % nicht überschreiten.

Aus der DE-OS 14 68 835 (= US-PS 3 394 127) ist ein Verfahren zur Herstellung von Alkalisalzen von Carboxymethyl cellulose bekannt, bei dem man nach der Veretherung ein Bleichmittel zugibt, um den Weißgrad des Produktes zu erhöhen. Bei Einsatz von Wasserstoffperoxid werden die erreichten Viskositäten im Bereich von etwa 20 bis 50 mPa·s angegeben, während bei Verwendung von Natriumchlorit als Bleichmittel nur Viskositäten über 1000 mPa·s erzielt werden und der angestrebte Weißgrad im gleichen Bereich wie bei Anwendung von Wasserstoffperoxid liegt.

Die US-PS 2 749 336 beschreibt ein Verfahren hauptsächlich zur Herstellung von Carboxymethylcellulose, bei dem man vor der Zugabe von Monochloressigsäure eine Natriumhypochloritlösung der Isopropanolhaltigen Natronlauge zusetzt

Nachteilig bei den bekannten Verfahren unter Verwendung der Oxidationsmittel Wasserstoffperoxid oder Hypochloritlösungen ist einerseits die Notwendigkeit der Reaktionsführung bei einer im Bereich von 40 bis 150 °C liegenden Temperatur, andererseits deren relativ leichte Zersetzlichkeit durch Temperatur- und Lichteinfluß, so daß der wirksame Anteil stark variieren kann. Hierdurch kann die Viskosität von Ansatz zu Ansatz stark unterschiedlich sein, was sehr unerwünscht ist.

Ein weiterer Nachteil Ist die Nichtstabilität der Viskosität der nach diesen Verfahren erhaltenen Produkte, da sich die Viskosität beim Lagern der Produkte häufig weiter verringert. Da der Viskositätsabbau der Celluloseether möglichst mit den bereits ausgewaschenen, noch feuchten Produkten durchgeführt werden soll, ist sowohl der Abbau mit energiereichen Strahlen, da er dann mit den nichtionischen Celluloseethertypen ohne störende Nebenreaktionen (Vernetzung) nicht durchgeführt werden kann, als auch der Abbau mit HCI- und/oder SO₂-Gas nachteilig, da die Feuchtigkeit dort bereits in sehr großem Maß beseitigt worden sein muß; außerdem treten bei Einsatz der letztgenannten Gase größere Korrosionsprobleme auf.

Es sind auch schon Reaktionen von Cellulose oder Celluloseetherderivaten mit Ozon bekannt geworden.

Aus der US-PS 3 138 564 ist ein Verfahren bekannt, bei dem polymerisierbare, vinylidengruppenhaltige Monomere auf ein solches Polysaccharid aufgepfropft werden, das vorher in wäßriger Dispersion oder Lösung mit Ozon oder einem Ozon enthaltenden Gas behandelt wurde. Das überschüssige Ozon wird mit Hilfe eines inerten Gases aus dem Reaktionsgemisch ausgeblasen; als Polysaccharid-Ausgangsmaterial wird u.a auch Carboxymethylcellulose genannt Diese Reaktion zwischen einem Polysaccharid und Ozon dient zur Erzeugung von radikalischen Zwischenstufen für die anschließend durchzuführende Pfropfung. Eine gezielte Abbaureaktion ist offensichtlich nicht beabsichtigt.

Nach dem Aufsatz "Untersuchungen über die Pfropfung von Carboxymethylcellulose mit Acrylnitril" von C. Simionescu, D. Feldman und C. Vasiliu in: Faserforschung und Textiltechnik 13, 1962, Heft 2, Seiten 70 bis 79, kann die Pfropfung In Gegenwart von Ce⁴⁺-Ionen durch Ultraschall, UV-Strahlung, ein Magnetfeld oder durch Ozonisierung eingeleitet werden; es wird dabei auch auf einen gewissen Viskositätsabfall hingewiesen, der zu einer Verringerung der Molekularmasse bis auf die Hälfte führen kann. Neben dem Ausgangsmaterial Carboxymethylcellulose wird auch Methylcellulose eingesetzt. Die Behandlung der in Filmform vorliegenden Celluloseether wird in wäßriger, schwach saurer Lösung unter gleichzeitiger Anwesenheit von Ce⁴⁺-Ionen vorgenommen.

In dem Aufsatz "Mechanism of Ozone Attack on α-Methyl Glucoside and Cellulosic Materials von A. A. Katal und C. Schuerch in: Journal of Polymer Science, Vol. 4, 1966, Seiten 2683 bis 2703, wird u. a. die Wechselwirkung von Ozon mit Methylcellulose eines Substitutionsgrades von 1,5 beschrieben. Mit zunehmender Menge an umgesetztem Ozon nimmt die Molekularmasse der Methylcellulose ab und die Anzahl der Carbonyl- bzw. Carboxylgruppen an den Molekülen zu, wobei diese Veränderungen sowohl bei einer Ozonisierung in einer Sauerstoff- als auch in einer Stickstoffatmosphäre stattfinden. Das Ozonisierungsverfahren wird in einer 1,6 gew.-%igen wäßrigen Methylcelluloselösung durchgeführt.

Nachteilig bei diesen Verfahren der Umsetzung von wasserlöslichen Celluloseethern mit Ozon ist die Durchführung der Reaktion in wäßriger Lösung, da dadurch in den großtechnischen Anlagen zur Herstellung von Celluloseethem eine zusätzliche Auflösungsstufe eingesetzt werden müßte, was beispielsweise einerseits zu großvolumigen Gefäßen (hochkonzentrierte Celluloseetherlösungen sind kaum herstellbar) zur Auflösung und andererseits zu einer energieverbrauchenden Wiederentfernung des Auflösemittels führen würde.

Aufgabe der vorliegenden Erfindung war es deshalb, ein Verfahren zur Herstellung niedrigviskoser Celluloseether vorzuschlagen, das ohne größeren apparativen Aufwand durchgeführt werden kann und zu Produkten mit sehr gleichmäßiger Viskosität führt die auch während der Lagerung stabil bleibt, und die sich sehr gut reinigen lassen.

Unter niedrigviskosen Celluloseethem sollen dabei solche verstanden werden, die Viskositäten von 3.000 mPa·s oder darunter, bevorzugt unter 1.000 mPa·s, in 1,8 gew.-%iger Lösung aufweisen.

Gelöst wird die vorstehend genannte Aufgabe durch ein Verfahren bei dem man Zellstoff mit wäßriger Natronlauge alkalisiert und anschließend verethert, dessen kennzeichnendes Merkmal darin besteht, daß man vorzugsweise bei und/oder nach der Alkalisierung, jedoch vor der Veretherung, eine wäßrige Natriumchloritlösung zusetzt in einer Menge von 2 bis 20 kg (bezogen auf den Stoffgehalt) pro 1000 kg Zellstoff, wobei ein Bereich von 4 bis 12 kg pro 1000 kg Zellstoff bevorzugt ist.

Gegenstand der Erfindung ist also ein Verfahren zur Herstellung von niedrigviskosen Celluloseethern durch Alkalisierung von Cellulose in Form von Zellstoff mit wäßriger Natronlauge und anschließender Veretherung, dadurch gekennzeichnet, daß bei und/oder nach der Alkalisierung, jedoch vor der Veretherung der Cellulose 0,2 bis 2 Gew.-% Natriumchlorit, bezogen auf den Zellstoff, in Form einer wäßrigen Lösung zugesetzt werden.

Die nach dem erfindungsgemäßen Verfahren hergestellten Produkte zeigen eine äußerst gleichmäßige Viskosität, d.h. sie zeigen weder eine Streuung innerhalb des jeweiligen Ansatzes noch bei verschiedenen Ansätzen und lassen sich gut auswaschen, ohne daß schmierige Produkte auftreten, wie bei den in ihrer Viskosität streuenden Produkten nach dem Stand der Technik.

Das Verfahren eignet sich zur Herstellung von Hydroxyalkylcellulosen, Carboxymethylcellulosen sowie Mischethern und wird besonders bei der Herstellung von Methylcellulosen eingesetzt.

In den folgenden Beispielen wird die Edfindung näher beschrieben, ohne daß jedoch eine Einschränkung auf die gezeigten Ausführungsbeispiele bestehen soll.

### Beispiele 1

1000 g gemahlener Zellstoff (Polymerisationsgrad etwa 700) wurden mit 1600 ml einer 37 gew.-%igen Natronlauge, der 4 g NaClO₂ in wäßriger Lösung zugesetzt waren, alkalisiert und anschließend mit Ethylenoxid und Chlormethyl bei Temperaturen unterhalb 100 °C im bekannten Gasumlaufverfahren verethert. Ein Teil der gewonnenen Methylhydroxyethylcellulose wurde mit heißem Wasser problemlos (keine Schmiere) nebenproduktfrei gewaschen und zu einem Granulat konfektioniert. Eine 1,8 gew.-%ige wäßrige Lösung wies eine Viskosität von 25 mPa·s auf. Das Produkt zeigte innerhalb der Charge keine wesentlichen Viskositätsunterschiede.

Bei Anwendung des gleichen Verfahrens ohne Zusatz von NaClO₂ wurde eine Viskosität von nur 400 mPa·s erhalten.

### Beispiele 2 und 3

Es wurde gemäß Beispiel 1 gearbeitet, jedoch wurden 8 bzw. 16 g NaClO₂ in wäßriger Lösung der Natronlauge zugesetzt. Die Viskositäten einer 1,8 gew.-%igen wäßrigen Lösung betrugen 20 bzw. 14 mPa·s. Die Ergebnisse entsprachen denen von Beispiel 1.

### Beispiel 4

50 g gemahlener Zellstoff (Polymerisationgrad etwa 700) wurden in 2 l Dimethylglykol aufgeschwämmt und mit 35,6 g einer 50 gew.-%igen Natronlauge, der 4 ml einer 20 gew.-%igen NaClO₂-Lösung zugesetzt waren, 20 Minuten gerührt. Danach wurden 44,1 g Netriumchloracetat hinzugefügt und das Gemisch auf 75 °C aufgeheizt und 1 Stunde bei dieser Temperatur gehalten. Nach dem Abkühlen wurde mit Essigsäure neutralisiert und das Lösemittel über einen Nutsche abgesaugt. Nach dreimaliger problemloser Waschung mit je 1,5 l 70%igem Ethanol wurde das Produkt getrocknet. Eine 1,8 gew.-%ige wäßrige Lösung der erhaltenen Carboxymethylcellulose hatte eine Viskosität von 23 mPa·s. Die Viskosität, über die gesamte Charge gemessen, war sehr gleichmäßig.

### Beispiel 5

Beispiel 4 wurde wiederholt, mit dem Unterschied, daß 8 ml einer 20 gew.-%igen NaClO₂-Lösung zugesetzt wurden.

Eine 1,8 gew.-%ige wäßrige Lösung des erhaltenen Produkts hatte eine Viskosität von 11 mPa·s.

### Beispiel 6

in einem großtechnischen Ansatz wurden 1000 kg gemahlener Zellstoff (polymerisationsgrad etwa 700) mit 37 gew.-%iger Natronlauge und 9 kg NaClO₂ wäßriger Lösung alkalisiert und anschließend wie im Beispiel 1 beschrieben verethert.

Es wurde ein gut auswaschbares und sehr einheitliches Produkt mit einer Viskosität von 20 mPa·s (gemessen als 1,8 gew.-%ige Lösung) erhalten.

### Beispiel 7

In einem großtechnischen Ansatz wurden 1000 kg gemahlener Zellstoff eines mittleren Polymerisationsgrades von 1.350 mit 37 gew.-%iger Natronlauge und 1,0 kg NaClO₂ in wäßriger Lösung alkalisiert und anschließend wie im Beispiel 1 beschrieben verethert.

Es wurde ein Produkt mit einer Viskosität von 950 mPa·s (gemessen als 1,8 gew -%ige Lösung) erhalten, das in seinen Eigenschaften einer aus Zellstoff von niedrigem Polymerisationsgrad hergestellten Methylcellulose entsprach.

Eine Vergleichsveretherung des gleichen Zellstoffs ohne Zugabe von Natriumchlorit bei der Alkalisierung führte zu Produkten mit einer Viskosität von 1.800 mPa·s.

### Beispiel 8

Es wurde ein Ansatz gefahren wie in Beispiel 7, die zugesetzte NaClO₂-Menge wurde jedoch auf 4,0 kg erhöht.

Das ausgewaschene Fertigprodukt hatte eine Viskosität von 270 mPa·s in 1,8 gew.-%iger Lösung.

### Vergleichsbeispiel 1

Unter den gleichen Bedingungen wie in Beispiel 6 beschrieben, wurde anstelle einer Natriumchloritlösung mit einer Natriumhypochloritlösung gearbeitet. Es wurden zweimal je 12 kg Natriumhypochlorit zum Einsatz gebracht. Die beiden Produkte hatten Viskositäten von 151 bzw. 31, 9 mPa·s (gemessen in 1,8 gew.-%iger wäßriger Lösung) und waren auch über die Charge hinweg sehr ungleichmäßig und ließen sich infolge von Schmieren schlecht auswaschen.

### Vergleichsbeispiel 2

Es wurde unter den Bedingungen von Vergleichsbeispiel 1 gearbeitet, jedoch wurden 16 kg Natriumhypochlorit verwendet.

Die Viskositäten, die innerhalb der Charge gemessen wurden, lagen zwischen 44,1 und 40,5 mPa·s (gemessen in 1,8 gew.-%iger wäßriger Lösung), was eine nicht vertretbare Schwankung darstellte.

Wie die vorstehenden Beispiele aufzeigen, sind bei Verwendung von Natriumchlorit-Lösungen gut auswaschbare, innerhalb der Charge und von Charge zu Charge gleich mäßige Produkte mit niedriger Viskosität zu erzielen, während bei Verwendung von Natriumhypochlorit nicht vertretbare Schwankungen auftreten.

Dieses Ergebnis ist als sehr überraschend anzusehen und war nicht vorhersehbar, da es sich bei beiden Verbindunggen um Oxidationsmittel d. h. um gebräuchliche Bleichmittel handelt.

## Patentansprüche

1. Verfahren zur Herstellung von niedrigviskosen Celluloseethern durch Alkalisierung von Cellulose in Form von Zellstoff mit wäßriger Natronlauge und anschließender Veretherung, dadurch gekennzeichnet, daß bei und/oder nach der Alkalisierung, jedoch vor der Veretherung der Cellulose 0,2 bis 2 Gew.-% Natriumchlorit, bezogen auf den Zellstoff, in Form einer wäßrigen Lösung zugesetzt werden.

2. Verfahren zur Herstellung von Celluloseethern nach Anspruch 1, dadurch gekennzeichnet, daß 0,4 bis 1,2 Gew.-% Natriumchlorit, bezogen auf den Zellstoff, zugesetzt werden.

3. Verfahren zur Herstellung von Celluloseethern nach Anspruch 1, dadurch gekennzeichnet, daß die Veretherung unter Zusatz von Methylchlorid im Gasumlaufverfahren durchgeführt wird.

## Claims

1. A process for the preparation of low-viscosity cellulose ethers, by alkalization of cellulose with aqueous sodium hydroxide solution followed by etherification, characterized in that 0.2 to 2 % by weight, relative to the cellulose, of an aqueous sodium chlorite solution are added during and/or after alkalization, but before etherification of the cellulose.

2. A process for the preparation of cellulose ethers as claimed in claim 1, characterized in that 0.4 to 1.2 % by weight of sodium chlorite, relative to the cellulose, are added.

3. A process for the preparation of cellulose ethers as claimed in claim 1, characterized in that the etherification is performed with an addition of methyl chloride by means of the circulating gas process.

## Revendications

1. Procédé de préparation d'éthers de cellulose de faible viscosité par alcalinisation de cellulose sous forme de pâte de cellulose avec une solution aqueuse de lessive de soude, suivie d'une éthérification, caractérisé en ce que l'on ajoute, pendant et/ou après l'alcalinisation, mais avant l'éthérification de la cellulose, 0,2 à 2 % en poids de chlorite de sodium, par rapport à la pâte de cellulose, sous forme d'une solution aqueuse.

2. Procédé de préparation d'éthers de cellulose selon la revendication 1, caractérisé en ce que l'on ajoute 0,4 à 1,2 % en poids de chlorite de sodium, par rapport à la pâte de cellulose.

3. Procédé de préparation d'éthers de cellulose selon la revendication 1, caractérisé en ce que l'éthérification est effectuée en ajoutant du chlorure de méthyle par un procédé à circulation de gaz.
